# EUROPEAN PATENT APPLICATION

(11) **EP 4 329 072 A1**
(43) Date of publication of application: **28.02.2024**
(21) Application number: 22822262.6
(22) Date of filing: 04.11.2022
(51) Int. Cl.: H01M 50/342, H01M 50/152, H01M 50/213

(54) **BATTERY CELL CAPABLE OF DIRECTIONALLY RELIEVING PRESSURE AND BATTERY MODULE**

(30) Priority: 15.06.2022 CN 202221498678 U
(71) Applicant: Eve Power Co., Ltd., Jingmen, Hubei 448000 (CN)
(72) Inventor: LI, Shangyi, Jingmen, Hubei 448000 (CN); HUANG, Liming, Jingmen, Hubei 448000 (CN); CHEN, Min, Jingmen, Hubei 448000 (CN)
(74) Representative: Murgitroyd & Company
(86) International application number: PCT/CN2022/130038
(87) International publication number: WO 2023/240905

(57) **Abstract**

The present disclosure relates to the field of battery technology. A battery cell with directional pressure relief and a battery module are provided. The battery cell with directional pressure relief includes a housing and a cover plate, and the cover plate is buckled on the housing. The cover plate is provided with an explosion-proof valve, the explosion-proof valve includes an arc notch and a connecting portion, the arc notch and the connecting portion are connected end-to-end to enclose and define a circular structure, and the circular structure separates the cover plate into a circular part and an annular part. When a thermal runaway occurs, the explosion-proof valve is flushed open, the arc notch is fractured, and the circular part is turned around the connecting portion.

## Description

### CROSS-REFERENCE TO RELATED APPLICATIONS

This application claims priority to Chinese Patent Application No. 202221498678.3, filed on June 15, 2022. The aforementioned application is hereby incorporated by reference in its entirety.

### TECHNICAL FIELD

The present disclosure relates to the field of battery technology, for example, relates to a battery cell with directional pressure relief and a battery module.

### BACKGROUND

In order to prevent a battery cell from exploding when a thermal runaway occurs, the battery cell is generally provided with an explosion-proof valve structure. The explosion-proof valve structure can release heat from the battery cell, thereby preventing the battery cell from exploding and ensuring a safety of a user.

Generally speaking, the explosion-proof valve structure in related technologies is generally a cross notch disposed on a bottom of the battery cell. When the thermal runaway in the battery cell occurs, a pressure inside the battery cell increases. When the pressure increases to a fixed value, the cross notch is flushed open, thereby releasing the pressure inside the battery cell. However, when the cross notch is fractured, an opening direction of the cross notch cannot be controlled, and a cover plate sealed the bottom of the battery cell is more susceptible to fall off. Due to an impact of the pressure from the battery cell, the cover plate may be ejected out in any direction after falling off, and more susceptible to cause injuries, thus a safety performance of the battery cell is poor.

### SUMMARY

To solve the above problems, a battery cell with directional pressure relief and a battery module are provided. An explosion-proof valve is opened directionally, and a connecting portion of the explosion-proof valve is provided to prevent the explosion-proof valve from ejecting out, thereby ensuring a safety of a user with a good safety performance.

In a first aspect, a battery cell with directional pressure relief is provided in an embodiment of the present disclosure. The battery cell with directional pressure relief includes:
a housing; and
a cover plate, wherein the cover plate is buckled on the housing, the cover plate is provided with an explosion-proof valve, the explosion-proof valve includes an arc notch and a connecting portion, the arc notch and the connecting portion are connected end-to-end to enclose and define a circular structure, the circular structure separates the cover plate into a circular part and an annular part, and the circular part and the annular part are both connected to the connecting portion, when the explosion-proof valve is opened, the arc notch is fractured and the circular part is turned around the connecting portion.

In an embodiment, a side of the circular part facing the housing is convexly provided with a step groove, the step groove is circular, and the step groove is coaxial with the cover plate.

In an embodiment, a side of the circular part facing the housing is convexly provided with a plurality of arc grooves, the plurality of arc grooves are arranged along a circumferential direction of the step groove, and a reinforcing rib is disposed between adjacent arc grooves of the plurality of arc grooves.

In an embodiment, the plurality of arc grooves are evenly arranged along the circumferential direction of the step groove.

In an embodiment, an included angle is defined between a bottom wall and a side wall of the reinforcing rib, and the included angle ranges from 30° to 60°.

In an embodiment, a width of the reinforcing rib ranges from 3mm to 5mm.

In an embodiment, an arc groove of the plurality of arc grooves disposed opposite the connecting portion is provided with a positioning rib.

In an embodiment, a side of the annular part away from the housing is convexly provided with an annular protruding rib, and the annular protruding rib is coaxial with the cover plate.

In an embodiment, a length of the connecting portion is less than a length of the arc notch, and the length of the connecting portion ranges from 5mm to 10mm.

In a second aspect, a battery module is provided in an embodiment of the present disclosure. The battery module includes the battery cell with directional pressure relief, wherein a plurality of battery cells with directional pressure relief are provided, and connecting portions of the plurality of the battery cells with directional pressure relief are disposed on a same side of the battery cells.

Beneficial effects of the embodiments of the present disclosure are as followings:
A battery cell with directional pressure relief is provided in the present disclosure. The battery cell with directional pressure relief includes a housing and a cover plate, the cover plate is buckled on the housing. The housing is provided with an explosion-proof valve, and the explosion-proof valve includes an arc notch and a connecting portion. The arc notch and the connecting portion are connected end-to-end to enclose and define a circular structure, and the circular structure separates the cover plate into a circular part and an annular part. When a thermal runaway occurs, the explosion-proof valve is flushed open, the arc notch is fractured, and the circular part is turned around the connecting portion, so that the explosion-proof valve can be opened in a fixed direction to release a pressure inside the housing. By providing the connecting portion, the explosion-proof valve cannot be ejected out after being opened, and a safety performance of the battery cell is high.

A battery module is further provided in the present disclosure. The battery module includes the above battery cell with directional pressure relief. A plurality of battery cells with directional pressure relief are provided, and connecting portions of the plurality of battery cells with directional pressure relief are disposed on a same side, so that explosion-proof valves of the plurality of battery cells with directional pressure relief are opened in a same direction when a thermal runaway occurs.

### BRIEF DESCRIPTION OF THE DRAWINGS

FIG. 1 is a schematic structural diagram of a battery cell with directional pressure relief according to an embodiment of the present disclosure.
FIG. 2 is a schematic structural diagram of a cover plate when an explosion-proof valve is not opened according to an embodiment of the present disclosure in a viewing.
FIG. 3 is a schematic structural diagram of a cover plate when an explosion-proof valve is opened according to an embodiment of the present disclosure.

### Reference numerals:

100, housing; 200, cover plate; 201, arc notch; 202, connecting portion; 210, step groove; 220, arc groove; 2201, reinforcing rib; 2202, positioning rib; 230, annular protruding rib.

### DETAILED DESCRIPTION OF THE EMBODIMENTS

In the description of the present application, unless otherwise specified and limited, the term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interactional between two elements. Meanings of the preceding terms in the present application may be understood according to situations.

In the present application, unless otherwise specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of the embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present application. In addition, terms "first" and "second" are only used to distinguish in terms of description and have no special meanings.

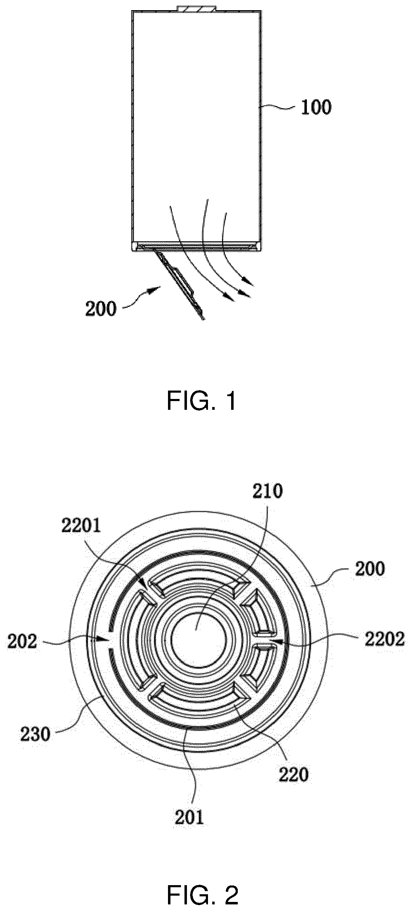

As shown in FIG. 1 to FIG. 3, a battery cell with directional pressure relief is provided according to an embodiment of the present disclosure. The battery cell with directional pressure relief includes a housing 100 and a cover plate 200, wherein the cover plate 200 is buckled on the housing 100. An end of the housing 100 is provided with an opening, and an edge of the cover plate 200 is connected to the opening of the housing 100. The cover plate 200 is provided with an explosion-proof valve, the explosion-proof valve includes an arc notch 201 and a connecting portion 202, and the arc notch 201 and the connecting portion 202 are connected end-to-end to enclose and define a circular structure. The circular structure separates the cover plate 200 into a circular part and an annular part, and the circular part and the annular part are both connected to the connecting portion 202. When a thermal runaway in the battery cell with directional pressure relief occurs, a pressure inside the housing 100 increases and the explosion-proof valve is flushed open, thereby forming a flow channel to release the pressure inside the housing 100. Since a wall thickness of the arc notch 201 is thin and a mechanical strength is relatively small compared with other parts, when a pressure inside the housing 100 increases, the arc notch 201 is flushed out first, and the circular part is turned outward around the connecting portion 202, thereby realizing a directional opening of the explosion-proof valve. Besides, since two ends of the arc notch 201 are not directly connected but connected through the connecting portion 202, the circular part cannot be ejected out after being turned around the connecting portion 202, thus a safety of a user is guaranteed.

In an exemplary embodiment, a side of the circular part facing an inner side of the housing 100 is convexly provided with a step groove 210, the step groove 210 is circular, and the step groove 210 is coaxial with the cover plate 200. There is a high requirement on an energy density of the battery cell with directional pressure relief, thus, an overall thickness of the cover plate 200 in related technologies is generally small, which leads to a reduction of a pressure resistance of the cover plate 200. When a pressure inside the housing 100 increases, the cover plate 200 may be deformed and protruded outward. When the cover plate 200 protrudes from an edge of the housing 100, heights of the battery cells with directional pressure relief are different, which may lead to a poor contact or a short circuit. By providing the step groove 210, a protrusion of the cover plate 200 can be alleviated. When a deformation of the cover plate 200 is small, a normal use of the battery cell with directional pressure relief is not affected. In addition, since the step groove 210 is recessed towards the inner side of the housing 100, a gas storage space inside the housing 100 is reduced, a time for opening the explosion-proof valve under the thermal runaway state is shorten, a sensitivity on opening the explosion-proof valve is improved, a response speed is faster, and the battery cell is more safety.

In an exemplary embodiment, a side of the circular part facing the housing 100 is convexly provided with a plurality of arc grooves 220, the plurality of arc grooves 220 are arranged along a circumferential direction of the step groove 210, and a reinforcing rib 2201 is disposed between any two adjacent arc grooves 220. By providing the reinforcing rib 2201, a mechanical strength of the cover plate 200 can be improved, and a performance to resist deformation of the cover plate 200 can be improved. For example, the plurality of arc grooves 220 are evenly arranged along the circumferential direction of the step groove 210, and the plurality of arc grooves 220 have a same size and shape. Since the arc groove 220 is also recessed towards the inner side of the housing 100, a gas storage space inside the housing 100 is reduced, a sensitivity on opening the explosion-proof valve is improved, and a safety performance is better.

The arc groove 220 may be formed by sheet metal. In order to make the arc groove 220 easy to demould during processing, an included angle is defined between a bottom wall and a side wall of the reinforcing rib 2201, and the included angle ranges from 30° to 60°. For example, in some embodiments, the included angle between the bottom wall and the side wall of the reinforcing rib 2201 may be provided as 30°, 40°, 50°, or 60°, which is not repeated here. A width of the reinforcing rib 2201 ranges from 3mm to 5mm. For example, the width of the reinforcing rib 2201 may be provided as 3 mm, 3.5 mm, 4 mm, 4.5 mm, or 5 mm, and other values with the range from 3 mm to 5 mm may also be provided, which is not limited in the embodiment.

Generally speaking, in a process of assembling the battery cells with directional pressure relief, the battery cells with directional pressure relief need to be carried or transferred. In the process, since the housing 100 and the cover plate 200 of the battery cell with directional pressure relief are both circular, a position of the connecting portion 202 on the cover plate 200 is difficult to determine. If the connecting portion 202 is installed randomly, opening directions of the explosion-proof valves of a plurality of the battery cells with directional pressure relief are not uniform. Thus, a positioning structure is required to determine an installation position of the battery cell with directional pressure.

In the embodiment, four arc grooves 220 are taken as an example to illustrate. Four reinforcing ribs 2201 are also provided between corresponding ones of the four arc grooves 220. An included angle between center lines of any two adjacent ones of the four reinforcing ribs 2201 is 90°. The connecting portion 202 and a middle of two ones of the four arc grooves 220 are on a same straight line. The arc groove 220 disposed opposite the connecting portion 202 is provided with a positioning rib 2202. In a transfer device for carrying the battery cell with directional pressure relief, a clamping groove is disposed at a position corresponding to the positioning rib 2202. The positioning rib 2202 may be clamped in the clamping groove, thereby determining an installation position of the battery cell with directional pressure relief, ensuring that connecting portions 202 on the cover plates 200 of a plurality of the battery cells with directional pressure relief are on a same side, and ensuring that opening directions of explosion-proof valves of a plurality of the battery cells with directional pressure relief are same.

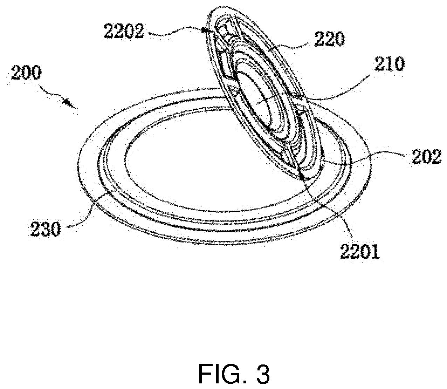

In some embodiments, the cover plate 200 and the housing 100 may be secured in a form of a grooved seal. In this case, as a result of the sealing method, when the circular structure of the cover plate 200 is subjected to internal pressure, a compressive stress on the annular part is greater than a compressive stress on the circular part. Thus, in order to ensure an adequate sealing strength for the cover plate 200, continue to refer to FIG. 2 and FIG. 3, a side of the annular part of the cover plate 200 away from the housing 100 is convexly provided with an annular protruding rib 230, and the annular protruding rib 230 is coaxial with the cover plate 200, thereby improving a compressive stress resistance of the cover plate 200 and ensuring a good sealing performance.

In the embodiment, an outer diameter of the cover plate 200 is 44 mm, an outer diameter of the housing 100 is 46 mm, and a length of the connecting portion 202 is less than a length of the arc notch 201. The length of the connecting portion 202 ranges from 5 mm to 10 mm. A minimum diameter of the step groove 210 is 6 mm, and a maximum diameter of the step groove 210 is 17 mm. An inner diameter of the annular protruding rib 230 is 36 mm, and an outer diameter of the annular protruding rib 230 is 42 mm. In other embodiments, the above structures may also be defined to other sizes, which are not limited by the embodiment.

A battery module is further provided according to an embodiment of the present disclosure. The battery module includes the above battery cell with directional pressure relief. A plurality of battery cells with directional pressure relief are provided in the battery module, and connecting portions 202 of the plurality of the battery cells with directional pressure relief are disposed on a same side of the battery cells, so that explosion-proof valves of the plurality of the battery cells with directional pressure relief are opened in a same direction to release a pressure inside the housing 100 when a thermal runaway occurs. Besides, by providing the connecting portion 202, the explosion-proof valve cannot be ejected out after being opened, and a safety performance is high.

## Claims

1. A battery cell with directional pressure relief, comprising:
a housing (100); and
a cover plate (200), wherein the cover plate (200) is buckled on the housing (100), the cover plate (200) is provided with an explosion-proof valve, the explosion-proof valve comprises an arc notch (201) and a connecting portion (202), the arc notch (201) and the connecting portion (202) are connected end-to-end to enclose and define a circular structure, the circular structure separates the cover plate (200) into a circular part and an annular part, and the circular part and the annular part are both connected to the connecting portion (202), when the explosion-proof valve is opened, the arc notch (201) is fractured and the circular part is turned around the connecting portion (202).

2. The battery cell with directional pressure relief of claim 1, wherein a side of the circular part facing the housing (100) is convexly provided with a step groove (210), the step groove (210) is circular, and the step groove (210) is coaxial with the cover plate (200).

3. The battery cell with directional pressure relief of claim 1, wherein a side of the circular part facing the housing (100) is convexly provided with a plurality of arc grooves (220), the plurality of arc grooves (220) are arranged along a circumferential direction of the step groove (210), and a reinforcing rib (2201) is disposed between adjacent arc grooves (220) of the plurality of arc grooves (220).

4. The battery cell with directional pressure relief of claim 3, wherein the plurality of arc grooves (220) are evenly arranged along the circumferential direction of the step groove (210).

5. The battery cell with directional pressure relief of claim 3, wherein an included angle is defined between a bottom wall and a side wall of the reinforcing rib (2201), and the included angle ranges from 120° to 150°.

6. The battery cell with directional pressure relief of claim 3, wherein a width of the reinforcing rib (2201) ranges from 3mm to 5mm.

7. The battery cell with directional pressure relief of claim 3, wherein an arc groove (220) of the plurality of arc grooves (220) disposed opposite the connecting portion (202) is provided with a positioning rib (2202).

8. The battery cell with directional pressure relief of any one of claim 1 to claim 7, wherein a side of the annular part away from the housing (100) is convexly provided with an annular protruding rib (230), and the annular protruding rib (230) is coaxial with the cover plate (200).

9. The battery cell with directional pressure relief of any one of claim 1 to claim 7, wherein a length of the connecting portion (202) is less than a length of the arc notch (201), and the length of the connecting portion (202) ranges from 5mm to 10mm.

10. A battery module, comprising the battery cell with directional pressure relief of any one of claim 1 to claim 9, wherein a plurality of battery cells with directional pressure relief are provided, and connecting portions (202) of the plurality of battery cells with directional pressure relief are disposed on a same side of the plurality of battery cells, so that explosion-proof valves of the plurality of battery cells with directional pressure relief are opened in a same direction.
